Europäisches Patentamt

(19) European Patent Office

Office européen des brevets

(11) Publication number: **0 430 876 A1**

(12) # EUROPEAN PATENT APPLICATION

(21) Application number: 90810891.3

(22) Date of filing: 20.11.90

(51) Int. Cl.⁵: **C08K 5/5333**, C08L 69/00, C08L 25/08, // (C08L69/00, 25:08), (C08L25/08, 69:00)

(30) Priority: 29.11.89 GB 8927010

(43) Date of publication of application:
05.06.91 Bulletin 91/23

(84) Designated Contracting States:
DE FR GB IT NL

(71) Applicant: CIBA-GEIGY AG
Klybeckstrasse 141
CH-4002 Basel (CH)

(72) Inventor: Buszard, David Lewitt, Dr.
373 Chester Rd.
Woodford, Cheshire SK7 1QQ (GB)
Inventor: Recchia, Idalo
34 Brankgate Court
Lapwing Lane, West Didsbury M20 8PD (GB)

(54) Flame retardant polymer compositions containing phosphonic acid salts.

(57) The present invention provides a flame retardant composition comprising (A) a blend of 20 to 90% by weight of a thermoplastic aromatic polycarbonate with 80 to 10% by weight of a thermoplastic addition polymer which is a copolymer of a styrene with at least one acrylic or maleic monomer and/or a graft polymer of a styrene, an acrylic monomer or said copolymer on a rubber, (B) 0.1 to 80% by weight, based on the weight of (A), of aluminium methyl methylphosphonate, and (C) 0 to 5% by weight, based on the weight of (A), of a polymer of a fluorine-containing ethylenically unsaturated monomer.

EP 0 430 876 A1

# FLAME RETARDANT POLYMER COMPOSITIONS CONTAINING PHOSPHONIC ACID SALTS

The present invention relates to flame retardant polymer compositions containing phosphonic acid salts.

European Patent Publication EP 0245207 describes the use of metal and metalloid salts of alkyl and substituted alkyl phosphonic acids as flame retardants for a large number of polymeric materials of many different types. The salts are described as being thermally stable at high temperatures and not giving unwanted plasticising properties to rigid polymers.

For the production of moulded thermoplastic articles, the compositions based on a blend of polystyrene and polyphenylene oxide and containing a salt of a phosphonic acid described in EP 0245207 give products having good flammability characteristics. However, for some purposes, such compositions do not have sufficiently good light stability or flow properties. Furthermore, with such a polymer blend it is difficult to produce white or light-coloured moulded articles. Some of the styrene copolymers described in EP 0245207 can give better results in these properties, but they tend to give mouldings having inferior flammability characteristics.

By means of the present invention, thermoplastic compositions can be obtained which have excellent flame retardant properties whilst also being processable to give products, for example moulded products, having a good combination of desirable physical properties.

Accordingly, the present invention provides a flame retardant composition comprising (A) a blend of 20 to 90% by weight of a thermoplastic aromatic polycarbonate with 80 to 10% by weight of a thermoplastic addition polymer which is a copolymer of a styrene with at least one acrylic or maleic monomer and/or a graft polymer of a styrene, an acrylic monomer or said copolymer on a rubber, (B) 0.1 to 80% by weight, based on the weight of (A), of aluminium methyl methylphosphonate, and (C) 0 to 5% by weight, based on the weight of (A), of a polymer of a fluorine-containing ethylenically unsaturated monomer.

The blend (A) may be a blend of 25 to 85% by weight of the polycarbonate with 75 to 25% by weight of the addition polymer, preferably a blend of 40 to 80% by weight of the polycarbonate with 60 to 20% by weight of the addition polymer. Especially preferred blends (A) are those of 60 to 80% by weight of the polycarbonate with 40 to 20% by weight of the addition polymer.

The polycarbonate generally has a weight average molecular weight $M_w$ of 10,000 to 100,000, preferably of 20,000 to 60,000. Suitable polycarbonates include homopolycarbonates and copolycarbonates of dihydric phenols, for example mononuclear phenols such as hydroquinone or resorcinol or, preferably, bisphenols such as bisphenol A, tetrachlorobisphenol A, tetrabromobisphenol A, tetramethylbisphenol A, 4,4'-dihydroxydiphenyl, bis(4-hydroxyphenyl) sulphide, 1,1-bis(4-hydroxyphenyl) cyclohexane, bis(4-hydroxyphenyl)sulphone and 2,2-bis(4-hydroxyphenyl)-1,1-dichloroethane.

The homopolycarbonates and copolycarbonates can be prepared using well known methods. Small amounts of aromatic compounds having at least 3 phenolic hydroxyl groups can be incorporated to give branched polycarbonates. Other suitable polycarbonates are block copolymers of homopolycarbonates or copolycarbonates such as those herein before described with polysiloxanes, polyethers or polyesters ; examples of such block copolymers and their preparation are described in US Patents 3030331 and 4192940.

Preferred polycarbonates are those of tetramethylbisphenol A, 1,1-bis(4-hydroxyphenyl) cyclohexane and, especially, bisphenol A.

The thermoplastic copolymer or graft polymer may have a weight average molecular weight $M_w$ of 10,000 to 200,000. Examples of copolymers are copolymers of styrene and/or alpha-methylstyrene and/or p-methylstyrene and/or p-chlorostyrene with one or more acrylic monomers such as acrylonitrile and/or esters of acrylic acid or methacrylic acid, optionally together with one or more other vinyl monomers such as vinyl acetate ; copolymers of styrene and/or alpha-methylstyrene and/or p-methylstyrene and/or p-chlorostyrene with maleic anhydride, optionally together with one or more acrylic monomers such as esters of acrylic acid or methacrylic acid and/or one or more other vinyl monomers such as vinyl acetate ; and mixtures of such copolymers.

Preferred copolymers include copolymers and mixtures of copolymers of styrene and/or alpha-methylstyrene with acrylonitrile and/or a $C_1$-$C_8$ alkyl ester of acrylic acid or methacrylic acid, such as methyl acrylate, ethyl acrylate, n-butyl acrylate, 2-ethylhexyl acrylate and the corresponding methacrylates, a particularly preferred such alkyl ester being methyl methacrylate. Especially preferred copolymers are commercially available copolymers of styrene and acrylonitrile known as SAN polymers.

Examples of graft polymers are graft polymers of styrenes such as styrene, alpha-methylstyrene, p-methylstyrene or p-chlorostyrene, acrylic monomers such as acrylontrile or esters of acrylic acid or methacrylic acid, or copolymers as hereinbefore described, on a rubber. Preferably, the graft polymer is of styrene, alpha-methylstyrene, acrylonitrile, a $C_1$-$C_8$ alkyl acrylate or a $C_1$-$C_8$ alkyl methacrylate, such as the alkyl acrylates and methacrylates mentioned above, or a preferred copolymer as hereinbefore described, on a rubber. The rubber base of the graft polymer is preferably a polybutadiene, a polyisoprene, a styrene-butadiene rubber, an acrylontrile-butadiene rubber, an alkyl acrylate rubber based on a $C_1$-$C_8$ alkyl acrylate or $C_1$-$C_8$ alkyl methacrylate which may contain up to 30% by weight of one or more copolymerised monomers such as acrylonitrile, styrene, vinyl acetate or vinyl ether, an EPDM rubber (i.e. a rubber prepared from ethylene, propylene and a diene monomer) or a mixture of two or more of such rubbers.

Especially preferred addition polymers are mixtures of the preferred copolymers hereinbefore described and the preferred graft polymers hereinbefore described, particularly the mixtures known as ABS (acrylontrile-butadiene-styrene) polymers.

The addition polymer may be prepared by conventional free radical polymerisation, generally using emulsion, suspension or bulk polymerisation processes.

The aluminium salt component (B) of the composition of the invention is preferably present in an amount of 2 to 30%, especially 5 to 20%, by weight, based on the weight of the polymer blend (A). The optimum amount for a particular polymer blend may be readily determined by simple experiment. The salt may be prepared as described in EP 0245207 or EP 0327496. It may be used in finely divided form to facilitate dispersion throughout the composition.

The amount of fluorine-containing polymer (C) is preferably from 0 to 1%, more preferably from 0.1 to 0.5%, especially from 0.1 to 0.3%, by weight, based on the weight of (A). Preferred polymers for use as (C) include polymers of tetrafluoroethylene, which may be polytetrafluoroethylene or copolymers of tetrafluoroethylene with one or more other fluorine-containing ethylenically unsaturated monomers, such as hexafluoropropylene and/or one or more fluorine-free ethylenically unsaturated monomers. Such polymers are well known and can be prepared by conventional processes. The fluorine-containing polymer (C) is preferably incorporated in the composition of the invention as a solid, which may include particles of another polymer, such as a copolymer or graft polymer as hereinbefore described, formed by coagulating and drying a mixture of an emulsion of the fluorine-containing polymer and an emulsion of the other polymer. In especially preferred embodiments, the polymer (C) is polytetrafluoroethylene.

Other fire-retardant additives and smoke-and toxic gas-suppressants may be included in the composition of the invention if desired. Examples of such materials are phosphorus-containing esters and salts, for example triaryl phosphates such as triphenyl phosphate and alkylated derivatives thereof, especially isopropylated derivatives thereof as described in US 3576923, resorcinol tetraphenyl bisphosphate, alkyl aryl phosphates such as 2-ethylhexyl diphenyl phosphate and isodecyl diphenyl phosphate, oligomeric alkyl and aryl phosphates and ammonium polyphosphates ; halogen-containing, usually bromine-containing or chlorine-containing compounds, particularly brominated diphenyl ethers, such as decabromodiphenyl ether, tetrabromobisphenol A derivatives, brominated polystyrene, bromoalkyl-substituted aromatic compounds, hexachlorocyclopentadiene, haloalkyl phosphates and haloalkyl phosphonates ; and metal compounds such as metal oxides and salts of alkali or alkaline earth metals with alkyl or aryl sulphonic acids.

The composition of the invention may also contain other conventional ingredients, such as heat stabilisers, light stabilisers, ultra-violet light absorbers, anti-oxidants, anti-static agents, preservatives, adhesion promoters, fillers, pigments, lubricants, blowing agents, fungicides, plasticisers, impact modifiers and processing aids.

The flame retardant composition may be prepared by mixing the polycarbonate, the addition polymer, the aluminium methyl methylphosphonate and any other desired ingredients in any order. When the composition is processed, it may be compounded using conventional equipment such as an extruder.

Compositions of the invention are particularly useful as moulding compositions, for example in the production of injection-moulded plastics articles.

The invention is illustrated by the following Examples. Parts are by weight unless stated otherwise.

## Example 1

A moulding composition is prepared by mixing, using a twin-screw extruder at 270°C, the following ingredients : 70 parts of Lexan® 101 (a bisphenol A-based polycarbonate available from General Electric Co), 30 parts of Ronfalin® FZ 311 (an ABS polymer available from DSM), 15 parts of aluminium methyl methylphosphonate and 0.2 part of Hostaflon® TF 2025 (a polytetrafluoroethylene available from Hoechst). The composition is moulded into test bars in an injection moulding machine at 250°C. The oxygen index (OI) of the bars is measured according to the method of ASTM 2863-87 standard and the flammability of the bars is tested according to the method of "Test for Flammability of Plastics Materials", Underwriters Laboratories Subject 94 (UL 94), February 1, 1984 at a specimen thickness of 1.6 mm. The results are shown below for these bars and for "control" bars produced from a corresponding composition containing no aluminium salt.

In the UL 94 standard, 94V-O is the highest rating, followed by 94V-1 and 94V-2 in descending order. "Freely burned" indicates failure to meet any of these ratings.

| Composition | OI % | UL 94 |
|---|---|---|
| Control | 23.3 | Freely burned |
| Example 1 | 30.8 | 94V-0 |

## Example 2

The procedure of Example 1 is repeated using, in place of the composition used in Example 1, a composition made by mixing 85 parts of Lexan 101, 15 parts of Ronfalin® FZ 311, 6 parts of aluminium methyl methylphosphonate, 0.2 part of Hostaflon® TF 2025 and 0.1 part of Antioxidant I (an ester of an alkylated hydroxyphenyl-substituted propionic acid). The results are shown below for bars produced from this composition and for "control" bars produced from a corresponding composition containing no aluminium salt.

| Composition | OI% | UL 94 |
|---|---|---|
| Control | 21.2 | Freely burned |
| Example 2 | 31.6 | 94 V-O |

## Example 3

The procedure of Example 1 for oxygen index measurement is repeated using, in place of the composition used in that Example, a composition made by mixing 50 parts of Lexan® 101, 50 parts of Ronfalin® FZ 311, 25 parts of aluminium methyl methylphosphonate, 0.2 part of Hostaflon® TF 2025 and 0.1 part of Antioxidant I. The results are shown below for bars produced from this composition and "control" bars produced from a corresponding composition containing no aluminium salt.

| Composition | OI% |
|---|---|
| Control | 20.2 |
| Example 3 | 26.1 |

## Example 4

The procedure of Example 1 for oxygen index measurement is repeated using, in place of the composition used in that Example, a composition containing 25 parts of Lexan® 101, 75 parts of Ronfalin® FZ 311, 30 parts of aluminium methyl methylphosphonate, 0.2 part of Hostaflon® TF 2025 and 0.1 part of Antioxidant I. The results are shown below for bars produced from this composition and "control" bars produced from a corresponding composition containing no aluminium salt.

| Composition | OI% |
|---|---|
| Control | 19.5 |
| Example 4 | 24.6 |

## Example 5

The procedure of Example 1 is repeated using, in place of the composition used in Example 1, a composition prepared by mixing 75 parts of Lexan® 101, 25 parts of Ronfalin® FZ 311, 20 parts of aluminium methyl methylphosphonate and 0.1 part of Antioxidant I. The results are shown below for bars produced from this composition.

| | | |
|---|---|---|
| OI% | : | 30.0 |
| UL 94 | : | 94 V-O |

## Example 6

The procedure of Example 1 is repeated using, instead of the composition used in that Example, a composition prepared by mixing 75 parts of Lexan® 101, 25 parts of Luran® 358N (a SAN polymer available from BASF), 10 parts of aluminium methyl methylphosphonate, 0.2 part of Hostaflon® TF 2025 and 0.1 part of Antioxidant I. The results are shown below for bars produced from this composition and "control" bars produced from a corresponding composition containing no aluminium salt.

| Composition | OI% | UL 94 |
|---|---|---|
| Control | 20.5 | Freely burned |
| Example 6 | 28.5 | 94 V-O |

## Example 7

The procedure of Example 1 is repeated using, instead of the composition used in that Example, a composition prepared by mixing 75 parts of Makrolan® 2400 FBL (a poly-carbonate available from Bayer), 25 parts of Ronfalin® FZ 311, 20 parts of aluminium methyl methylphosphonate, 0.2 part of Hostaflon® TF 2025 and 0.1 part of Antioxidant I. The results are shown below for bars produced from this composition and bars produced from a corresponding composition containing no aluminium salt.

| Composition | OI% | UL 94 |
|---|---|---|
| Control | 20.5 | Freely burned |
| Example 7. | 29.8 | 94 V-O |

## Claims

1. A flame retardant composition comprising (A) a blend of 20 to 90% by weight of a thermoplastic aromatic polycarbonate with 80 to 10% by weight of a thermoplastic addition polymer which is a copolymer of a styrene with at least one acrylic or maleic monomer and/or a graft polymer of a styrene, an acrylic monomer or said copolymer on a rubber, (B) 0.1 to 80% by weight, based on the weight of (A), of aluminium methyl methylphosphonate, and (C) 0 to 5% by weight, based on the weight of (A), of a polymer of a fluorine-containing ethylenically unsaturated monomer.

2. A composition according to claim 1, in which the blend (A) is a blend of 40 to 80% by weight of the polycarbonate with 60 to 20% by weight of the addition polymer.

3. A composition according to claim 1, in which the polycarbonate has a weight average molecular weight $M_w$ of 10,000 to 100,000.

4. A composition according to claim 1, in which the polycarbonate is a polycarbonate of bisphenol A, tetramethylbisphenol A or 1,1-bis(4-hydroxyphenyl) cyclohexane.

5. A composition according to claim 1, in which the addition polymer is a copolymer, or mixture of copolymers, of (i) styrene, alpha-methylstyrene or a mixture of styrene and alpha-methylstyrene with (ii) acrylonitrile, a $C_1$-$C_8$ alkyl ester of acrylic acid or methacrylic acid or a mixture of acrylonitrile and said ester.

6. A composition according to claim 1, in which the addition polymer is a graft polymer on a rubber of styrene, alpha-methylstyrene, acrylonitrile, a $C_1$-$C_8$ alkyl acrylate, a $C_1$-$C_8$ alkyl methacrylate or a copolymer, or mixture of copolymers, of (i) styrene, alpha-methylstyrene or a mixture of styrene and alpha-methylstyrene with (ii) acrylonitrile, a $C_1$-$C_8$ alkyl ester of acrylic acid or methacrylic acid or a mixture of acrylonitrile and said ester.

7. A composition according to claim 6, in which the rubber is a polybutadiene, a polyisoprene, a styrene-butadiene rubber, an acrylonitrile-butadiene rubber, an alkyl acrylate rubber based on a $C_1$-$C_8$ alkyl acrylate or $C_1$-$C_8$ alkyl methacrylate, an EPDM rubber or a mixture of two or more thereof.

8. A composition according to claim 1, in which the addition polymer is an ABS polymer.

9. A composition according to claim 1, in which the addition polymer has a weight average molecular weight $M_w$ of 10,000 to 200,000.

10. A composition according to claim 1, in which the polymer (C) is polytetrafluoroethylene.

11. A composition according to claim 1, in which the polymer (C) is incorporated as a solid formed by coagulating and drying a mixture of an emulsion of the polymer of the fluorine-containing monomer and an emulsion of the addition polymer.

12. A composition according to claim 1, moulded with heating.

**European Patent Office**

## EUROPEAN SEARCH REPORT

Application Number

EP    90 81 0891

| Category | Citation of document with indication, where appropriate, of relevant passages | Relevant to claim | CLASSIFICATION OF THE APPLICATION (Int. Cl.5) |
|---|---|---|---|
| D,X | EP-A-327496 (CIBA-GEIGY AG)<br>* column 2, line 62 - column 3, line 11; claims * | 1, 6-9, 12 | C08K5/5333<br>C08L69/00<br>C08L25/08 |
| D,Y | | 1-12 | //(C08L69/00,<br>25:08) |
| Y | EP-A-207359 (BAYER AG)<br>* claims * | 1-5,<br>9-12 | (C08L25/08,<br>69:00) |
| Y | EP-A-174493 (BAYER AG)<br>* claims * | 1-4,<br>6-12 | |

TECHNICAL FIELDS SEARCHED (Int. Cl.5)

C08K
C08L

The present search report has been drawn up for all claims

| Place of search | Date of completion of the search | Examiner |
|---|---|---|
| THE HAGUE | 22 FEBRUARY 1991 | DE LOS ARCOS Y E. |